# EUROPEAN PATENT SPECIFICATION

(11) **EP 3 420 821 B1**
(45) Date of publication and mention of the grant of the patent: **22.04.2020**
(21) Application number: 18178968.6
(22) Date of filing: 21.06.2018
(51) Int. Cl.: A21C 1/02, A21C 1/14, B01F 15/00, B08B 1/00

(54) **KNEADING MACHINE**
KNETMASCHINE
MACHINE DE MALAXAGE

(30) Priority: 29.06.2017 IT 201700073065
(43) Date of publication of application: 02.01.2019
(73) Proprietor: SANCASSIANO S.p.A., I-12060 Roddi d'Alba (Cuneo) (IT)
(72) Inventor: DROCCO, Davide, I-12060 Roddi D'Alba (Cuneo) (IT)
(74) Representative: Frontoni, Stefano

(56) References cited:
- EP-A1- 0 350 754
- DE-A1-102010 042 542
- GB-A- 335 059
- US-A- 1 727 672
- US-A- 2 306 245

## Description

### Prior art

The present invention relates to the field of kneading machines, in particular for applications in the foodstuff field.

A problem that afflicts the kneading machines in question, above all kneading machines with vertical configuration, is represented by the tendency of the dough being prepared to wind around the kneading implements, as a result of rotation thereof, and to rise along them until they reach the region of connection between them and the supporting frame of the machine. In this position, the dough twists around the kneading implements with an increasingly higher pressure, and possibly even penetrates into the frame of the machine, where it reaches the various mechanical driving members, for example the bearings on which the shafts that carry the kneading implements are mounted.

This tendency to penetrate into the frame of the machine may lead to a rapid deterioration of the mechanical parts involved on account of the water and salt contained in the dough. In particular, the bearings mentioned above may oxidise rapidly, and consequently need to be replaced before expiry of their natural service life.

On the other hand, the dough itself that twists around the kneading implements and climbs up them even so constitutes a problem for the kneading quality in so far as this portion of dough will not present the same degree of kneading as the remaining part that has remained on the bottom of the tank. US2,306,245 represents certain technical background.

### Object and summary of the invention

The object of the present invention is to solve the aforesaid drawbacks.

This object is achieved via a kneading machine according to Claim 1.

The claims form an integral part of the technical teaching provided herein in relation to the invention.

### Brief description of the drawings and detailed description of one or more embodiments of the invention

Further characteristics and advantages of the invention will emerge clearly from the ensuing description with reference to the annexed drawings, which are provided purely by way of non-limiting example and in which:
- Figure 1 illustrates an example of a kneading machine of the type in question;

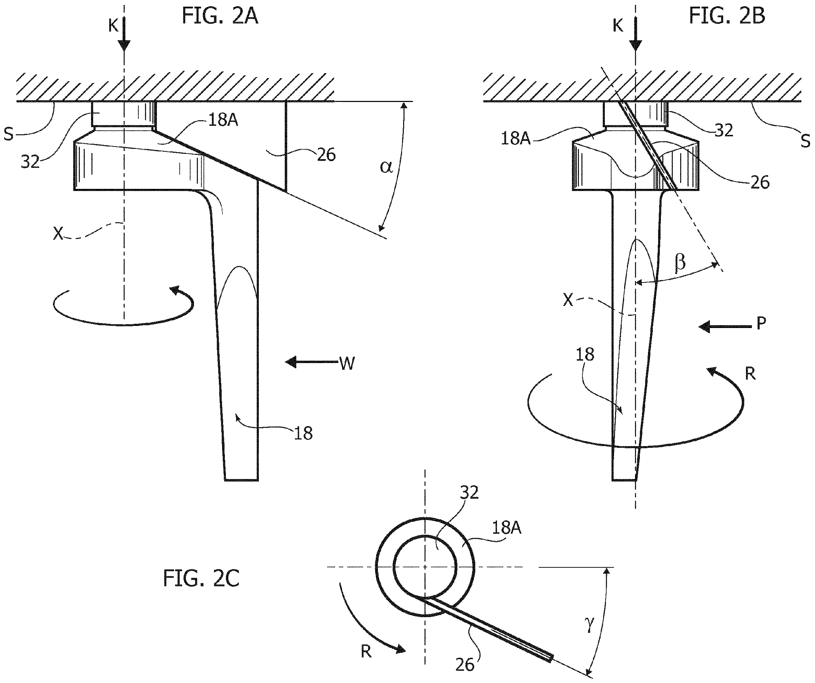

- Figures 2a-2c illustrate detailed views of the kneading implement of the machine of Figure 1, in the three directions K, W, and P; and
- Figures 3a-3d illustrate detailed views of other examples of kneading implements produced and installed according to the teachings provided herein.

In the ensuing description, various specific details are illustrated, aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are merely provided for convenience and hence do not define the sphere of protection or the scope of the embodiments.

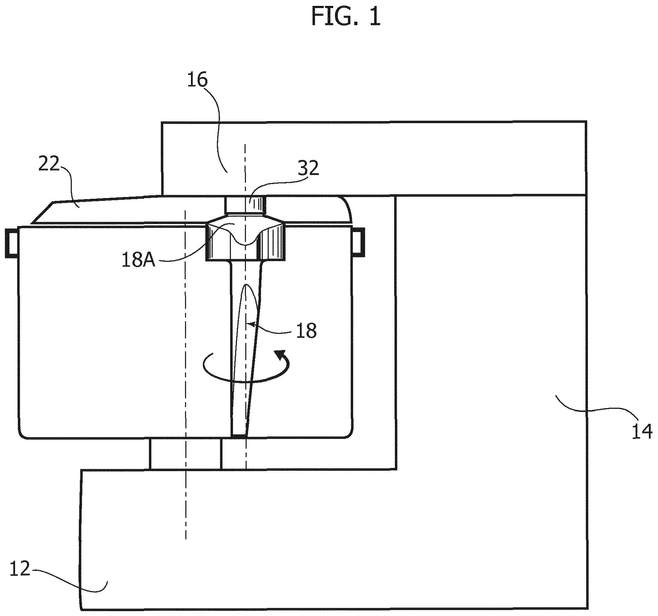

Figure 1 is a schematic illustration of an example of kneading machine for preparing doughs.

The above machine has a so-called "vertical" configuration, i.e., where the kneading implements rotate about vertical axes of rotation. In particular, the machine illustrated has a structure defining a base 12, which extends horizontally and carries on its upper side a platform for supporting the kneading tank, a column 14, which contains the motors of the machine and carries its control panels, and finally, a head assembly 16, which extends horizontally in a position opposed to the base 12, carries the kneading implements 18, and contains the means for transmission of motion from the motors to the kneading implements.

Conventionally, as illustrated in Figure 1, the head assembly 16 is prearranged with a covering panel 22, which is designed to set itself up against, or engage, the top edge of the tank so as to function as lid thereof. This panel may in any case even not be provided in other versions of the machine.

In any case, the head assembly 16 defines, on the underside facing the kneading implements, a surface S, which separates the inside of the assembly from the kneading implements and, more in general, from the kneading zone of the machine. This surface may be defined by the panel 22 itself, where the latter is envisaged, or else by one and the same wall of the head assembly 16.

In a way in itself known, in a position corresponding to each kneading implement, the above surface has an opening that is traversed by part of the drive shaft thereof so that the latter projects underneath the opening with an end portion, to which the kneading implement is rigidly fixed.

As discussed at the start, in conventional kneading machines it is this connection region towards which the dough entangled around the kneading implement tends to move, and it is through the opening mentioned above that the dough can penetrate into the head assembly.

In the machines of a known type, there is usually provided a sleeve that engages the above opening on the outer side of the head assembly and surrounds the shaft of the kneading implement so as to separate the latter and the inside of the assembly from the kneading zone of the machine, underlying the surface S.

As discussed above, the aforesaid arrangement is not, however, sufficient to prevent penetration of the dough into the head assembly and, on the other hand, does not solve the problem of the part of dough that remains not completely kneaded.

To return now to the kneading machine described herein, it is characterized in that the kneading implements 18 have, in their upper part, a surface 18a that faces the surface S of the head assembly and extends around the axis of rotation X of the kneading implement with a development such that, for each radial direction, its distance from the surface S increases as the distance from the axis of rotation X increases. Moreover, set between this surface and the surface S of the head assembly is at least one scraping implement 26, which is mounted fixed on the head assembly 16 and is prearranged for engaging the surface 18a according to a sliding contact. The scraping implement 26 is constituted by a blade, preferably made of anti-friction plastic material, provided with a shaped edge for engagement of the surface 18a, which has a shape corresponding to a profile of the surface 18a in a radial direction thereof or else in a secant direction (with respect to the overall circular section of the kneading implement).

This scraping implement hence operates so as to sweep away any possible dough that reaches the upper part of the kneading implement as a result of rotation of the latter.

The surface 18a has a frustoconical conformation with geometrical axis coinciding with the axis of rotation of the kneading implement. Preferably, the conicity of this surface is such as to define an angle of inclination α of this surface, with respect to the surface S, that is at least 2°, preferably equal to or higher than 5°, the aim being to favour dropping of the dough towards the kneading zone of the machine.

Moreover, in various preferred embodiments, as in the one illustrated, the scraping implement 26 is set in a plane inclined with respect to the axis of rotation of the kneading implement, in particular by an angle β in the example illustrated in the figure, the aim being that the scraping implement 26 should exert also an action of thrust on the dough that tends to sweep it off the surface S. In various preferred embodiments, as in the one illustrated, moreover set in the same region comprised between the surfaces S and 18a is a covering ring nut 32, which is mounted fixed on the assembly 16, engaging the aforesaid opening of the surface S, which is traversed by the drive shaft of the kneading implement, and surrounding the shaft itself. This element basically has the function of separating from the kneading zone the drive shaft of the kneading implement and the other mechanical parts contained in the assembly 16, which otherwise would be accessible through the opening in question.

In various preferred embodiments, as in the one illustrated, the scraping implement 26 is mounted in contact with the ring nut 32 and, starting from the latter, projects outwards in a radial or else secant direction. The present applicant has found that the positioning of the second type is able to favour to a greater degree detachment and flowing away of the dough scraped off.

In operation of the machine described herein, any possible dough that were to twist around the kneading implements, and climb up towards the upper region thereof, would hence be intercepted by the scraping implement 26, and as a result of the action of this would be separated from the kneading implement and sent back towards the bottom of the tank.

Consequently, in the light of the foregoing, the machine described herein is not subject to the risk of the dough possibly reaching the mechanical parts of the head assembly, and on the other hand, is able to guarantee that all the dough will be kneaded in a uniform way, thus reaching the same degree of kneading.

It is to be noted that the teachings appearing above may be also applied to kneading machines with horizontal or oblique configuration.

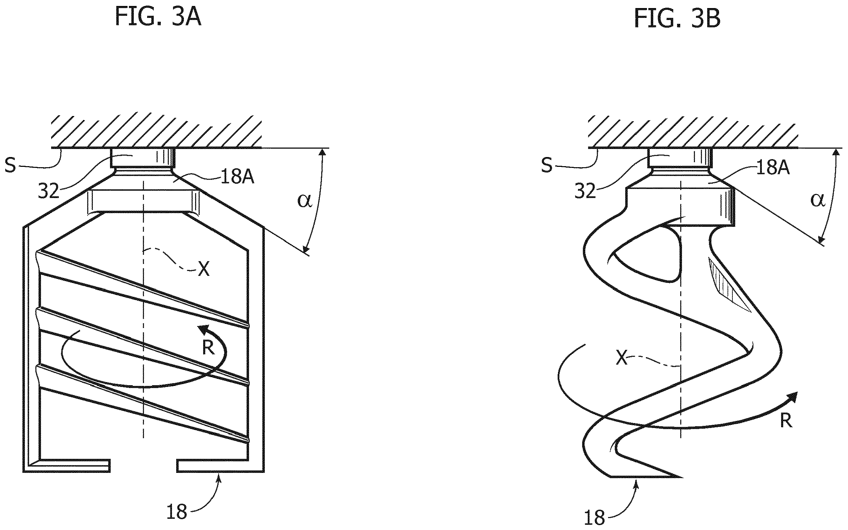

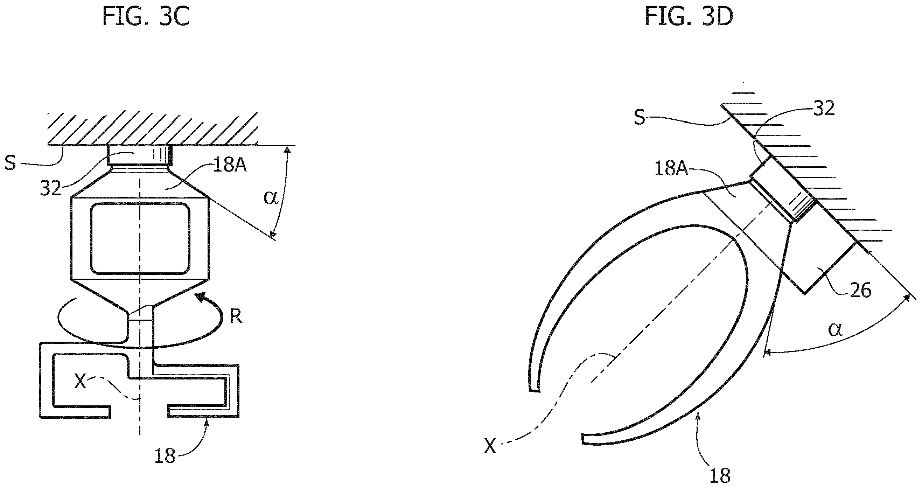

Finally, it should be noted that the problems mentioned at the start are substantially shared by all types of kneading implements commonly used, and in this regard, Figures 3a, 3b, 3c, and 3d represent the same configuration of installation described above, reproduced with other types of kneading implements (the scraping implement 26 is illustrated only in Figure 3d).

As mentioned above, the preferred application for the machine described herein regards the sector of foodstuff doughs. However, it is clear that the machine in question may advantageously be used also in other contexts.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A kneading machine comprising a head assembly (16) provided with at least one kneading implement (18) rotating about an axis of rotation (X),
wherein said assembly comprises an internal housing for housing the means for driving said kneading implement and defines a surface (S) that is transverse to said axis of rotation (X) and that separates the working space of said kneading implement from said internal housing,
said machine being **characterized in that**:
- said kneading implement (18) has, at its end portion closest to said surface, a frustoconical surface (18a) with geometrical axis coinciding with said axis of rotation (X), which faces said surface (S) and extends about said axis of rotation according to a development such that, for each radial direction, its distance from said surface (S) increases as the distance from said axis of rotation (X) increases;
- set between said frustoconical surface (18A) and said surface (S) is at least one scraping implement (26), which is mounted fixed on said head assembly (16) and is prearranged for engaging said frustoconical surface (18a) according to a sliding contact,
wherein said scraping implement (26) is constituted by a blade provided with a shaped edge for engagement of said frustoconical surface (18a), which has a shape corresponding to a profile of said frustoconical surface (18a) in a radial or secant direction thereof.

2. The machine according to Claim 1, wherein said scraping implement (26) is constituted by a blade, preferably made of anti-friction plastic material.

3. The machine according to Claim 1, wherein the conicity of said frustoconical surface (18a) is such as to define an angle of inclination α of said frustoconical surface with respect to said surface (S), which is at least equal to 2°, preferably greater than 5°.

4. The machine according to any one of the preceding claims, wherein said scraping implement (26) is set in a plane inclined according to a pre-set angle (β) with respect to said axis of rotation of the kneading implement (18) so as to exert an action of thrust in regard to the dough away from said surface (S).

5. The machine according to any one of the preceding claims, wherein said surface (S) has an opening traversed by the drive shaft of said implement (18), said machine comprising a covering ring nut (32), which is mounted fixed on said assembly (16), in a position sharing said axis of rotation, engaging said opening and surrounding said shaft.

## Patentansprüche

1. Knetmaschine, die eine Kopfanordnung (16) umfasst, welche mit mindestens einem um eine Drehachse (X) drehbaren Knetwerkzeug (18) versehen ist,
wobei die Anordnung ein Innengehäuse zum Aufnehmen der Mittel zum Antreiben des Knetwerkzeugs umfasst und eine Fläche (S) definiert, die quer zu der Drehachse (X) verläuft und die den Arbeitsbereich des Knetwerkzeugs von dem Innengehäuse trennt,
wobei die Maschine **dadurch gekennzeichnet ist, dass**:
- das Knetwerkzeug (18) an seinem der Fläche am nächsten gelegenen Endabschnitt eine kegelstumpfförmige Fläche (18a) mit einer mit der Drehachse (X) zusammenfallenden geometrischen Achse aufweist, die der Fläche (S) zugewandt ist und sich um die Drehachse herum mit einem solchen Verlauf erstreckt, dass in jeder Radialrichtung ihr Abstand von der Fläche (S) mit zunehmendem Abstand von der Drehachse (X) zunimmt,
- zwischen die kegelstumpfförmige Fläche (18A) und die Fläche (S) mindestens ein Abstreifwerkzeug (26) gesetzt ist, das ortsfest an der Kopfanordnung (16) montiert und zum Angreifen an der kegelstumpfförmigen Fläche (18a) in Gleitkontakt eingerichtet ist,
wobei das Abstreifwerkzeug (26) durch ein mit einer zum Angreifen an der kegelstumpfförmigen Fläche (18a) ausgebildeten Kante versehenes Messer gebildet ist, das eine einem Profil der kegelstumpfförmigen Fläche (18a) in deren Radial- oder Sekantenrichtung entsprechende Form aufweist.

2. Maschine nach Anspruch 1, wobei das Abstreifwerkzeug (26) durch ein Messer gebildet ist, das bevorzugt aus reibungsminderndem Kunststoff hergestellt ist.

3. Maschine nach Anspruch 1, wobei die Kegelform der kegelstumpfförmigen Fläche (18a) solcherart ist, dass sie einen Neigungswinkel α der kegelstumpfförmigen Fläche in Bezug auf die Fläche (S) definiert, der mindestens gleich 2° und bevorzugt größer als 5° ist.

4. Maschine nach einem der vorhergehenden Ansprüche, wobei das Abstreifwerkzeug (26) in eine Ebene gelegt ist, die gemäß einem vorab eingestellten Winkel (β) in Bezug auf die Drehachse des Knetwerkzeugs (18) so geneigt ist, dass auf den Teig eine Schubwirkung weg von der Fläche (S) ausgeübt wird.

5. Maschine nach einem der vorhergehenden Ansprüche, wobei die Fläche (S) eine von der Antriebswelle des Werkzeugs (18) durchlaufene Öffnung aufweist, wobei die Maschine eine Abdeckringmutter (32) umfasst, die ortsfest an der Anordnung (16) in einer Position montiert ist, in der sie dieselbe Drehachse aufweist, in die Öffnung eingreift und die Welle umgibt.

## Revendications

1. Machine de malaxage comprenant un ensemble tête (16) muni d'au moins un outil de malaxage (18) tournant autour d'un axe de rotation (X),
dans laquelle ledit ensemble comprend un boîtier interne pour recevoir le moyen d'entraînement dudit outil de malaxage et définit une surface (S) qui est transversale audit axe de rotation (X) et qui sépare l'espace de travail dudit outil de malaxage dudit boîtier interne,
ladite machine étant **caractérisée en ce que** :
- ledit outil de malaxage (18) a, au niveau de sa partie d'extrémité la plus proche de ladite surface, une surface tronconique (18a) ayant un axe géométrique coïncidant avec ledit axe de rotation (X), qui fait face à ladite surface (S) et s'étend autour dudit axe de rotation selon un développement tel que, pour chaque direction radiale, sa distance par rapport à ladite surface (S) augmente à mesure que la distance par rapport audit axe de rotation (X) augmente ;
- entre ladite surface tronconique (18A) et ladite surface (S) au moins un outil de raclage (26) est placé, qui est monté fixe sur ledit ensemble tête (16) et est pré-agencé pour s'engager avec ladite surface tronconique (18a) selon un contact coulissant,
dans laquelle ledit outil de raclage (26) est constitué par une lame munie d'un bord profilé pour s'engager avec ladite surface tronconique (18a), qui a une forme correspondant à un profil de ladite surface tronconique (18a) dans une direction radiale ou sécante de celui-ci.

2. Machine selon la revendication 1, dans laquelle ledit outil de raclage (26) est constitué par une lame, de préférence en matière plastique antifriction.

3. Machine selon la revendication 1, dans laquelle la conicité de ladite surface tronconique (18a) est telle qu'elle définit un angle d'inclinaison α de ladite surface tronconique par rapport à ladite surface (S), qui est au moins égal à 2°, de préférence supérieure à 5°.

4. Machine selon l'une quelconque des revendications précédentes, dans laquelle ledit outil de raclage (26) est placé dans un plan incliné selon un angle prédéfini (β) par rapport audit axe de rotation de l'outil de malaxage (18) de manière à exercer une action de poussée par rapport à la pâte loin de ladite surface (S).

5. Machine selon l'une quelconque des revendications précédentes, dans laquelle ladite surface (S) a une ouverture traversée par l'arbre d'entraînement dudit outil (18), ladite machine comprenant un écrou annulaire de recouvrement (32), qui est monté fixe sur ledit ensemble (16), dans une position de partage dudit axe de rotation, d'engagement avec ladite ouverture et d'encerclement dudit arbre.
